**Europäisches Patentamt**

**European Patent Office**

**Office européen des brevets**

(19)

(11) Veröffentlichungsnummer: **0 313 099 B1**

(12) **EUROPÄISCHE PATENTSCHRIFT**

(45) Veröffentlichungstag der Patentschrift:
09.10.91 Patentblatt 91/41

(51) Int. Cl.⁵: **B60J 7/053**, B60J 7/02,
F16H 19/00

(21) Anmeldenummer: **88117718.2**

(22) Anmeldetag: **13.12.86**

(54) **Fahrzeugschiebedach.**

Teilanmeldung 91101942.0 eingereicht am
12/02/91.

(30) Priorität: **19.12.85 DE 3544941**
**19.12.85 DE 3544940**

(43) Veröffentlichungstag der Anmeldung:
**26.04.89 Patentblatt 89/17**

(45) Bekanntmachung des Hinweises auf die
Patenterteilung:
**09.10.91 Patentblatt 91/41**

(84) Benannte Vertragsstaaten:
**DE FR GB IT**

(56) Entgegenhaltungen:
**DE-A- 2 052 295**
**DE-A- 3 124 325**
**FR-A- 2 464 844**
**FR-A- 2 503 059**
**GB-A- 2 164 006**

(60) Veröffentlichungsnummer der früheren
Anmeldung nach Art. 76 EPü : **0 250 507**

(73) Patentinhaber: **Farmont Produktion GmbH &**
**Co. KG**
**Schiess-Strasse 55**
**W-4000 Düsseldorf 11 (DE)**

(72) Erfinder: **Farmont, Rolf, Dr.**
**Hortensiastrasse 17**
**W-4000 Düsseldorf (DE)**
Erfinder: **Wilming, Michael**
**Ernst-Velten-Strasse 19**
**W-4150 Krefeld 12 (DE)**

(74) Vertreter: **Schumacher, Horst, Dr. Dipl.-Phys.**
**et al**
**Patentanwälte Dipl.-Phys. Dr. Peter Palgen**
**Dipl.-Phys. Dr. H. Schumacher Frühlingstrasse**
**43A (Ecke Holunderweg)**
**W-4300 Essen 1 (DE)**

## Beschreibung

Die Erfindung betrifft ein Fahrzeugschiebedach mit den Merkmalen des Oberbegriffs von Patentanspruch 1.

Insbesondere bei oberhalb des Fahrzeugdaches verschiebbaren, als Spoiler-Version bekannten Platten ergibt sich unter anderem das Problem, die erforderlichen Schließkräfte auf möglichst einfache Weise aufzubringen. Besonders groß ist dieses Problem bei sogenannten Nachrüst-Schiebedächern sowie anderen Schiebedächern, bei denen die verschiebbare Platte in der Verschlußstellung gegen eine, insbesondere umlaufende, Dichtung angedrückt werden muß.

Aus der DE-A-3124325 ist ein Fahrzeugschiebedach mit den Merkmalen des Oberbegriffs von Patentanspruch 1 bekannt. Die dortigen vorderen Höhenverstellorgane sind an den seitlichen Rändern der Platte angeordnet und werden gemeimsam mit der Platte verschoben. Dieses bekannte vordere Höhenverstellorgan ist also in allen Schiebepositionen der Platte wirksam, indem durch das vordere Höhenverstellorgan eine ganz bestimmte Höhe der Plattenvorderkante bezüglich des Schiebedachrahmens aufrechterhalten wird. Bei diesem bekannten Schiebedach wird die Platte durch die vorderen Höhenverstellorgane an den beiden Enden ihrer Vorderkante angehoben bzw. abgesenkt. Hierdurch wird der Schließdruck verbessert. Dieser Schließdruck wirkt sich natürlich am stärksten in der Nähe derjenigen Stellen auf die Platte aus, an denen sich die beiden vorderen Höhenverstellorgane befinden, also auf das rechte und linke Ende der Vorderkante. Wegen der nicht unerheblichen Breite der Platte hat diese eine natürliche Elastizität, ist also nicht völlig starr. Dies führt dazu, daß im Bereich der Mitte der Vorderkante ein geringerer Schließdruck erreicht würde, wenn die Durchbiegung der Platte exakt der Durchbiegung des Fahrzeugdaches im Bereich der Plattenvorderkante entsprechen würde.

Zur Behebung dieser unterschiedlichen Dichtwirkungen ist es üblich, die Durchbiegung der üblicherweise konvex gebogenen Platte (im entspannten Zustand) geringer als die konvexe Durchbiegung des feststehenden Teils des Fahrzeugdaches zu halten. Dadurch wird beim Absenken der Vorderkante der Platte ihr mittlerer Bereich auf die fahrzeugdachseitige Dichtung heruntergezogen. Beim weiteren Absenken der vorderen Höhenverstellorgane wird die Plattenvorderkante dann elastisch verbogen und an den Seitenrändern auf die Dichtung heruntergezogen. Dies ist allgemein geübte Praxis.

Es wurde nun gefunden, daß in Fällen der vorerwähnten Art ein relativ großer Höhenverstellweg der vorderen Höhenverstellorgane erforderlich ist, wenn die Belastung der Dichtung im Bereich der Mitte der Plattenvorderkante beim Hinausfahren aus der bzw. Hineinfahren in die Schließstellung der Platte geringer gehalten werden sollte. Es besteht also ein Konflikt : einerseits soll eine möglichst perfekte Dichtung an der Plattenvorderkante bei bestmöglicher Dichtungsschonung erreicht werden und andererseits soll und kann der Höhenverstellweg der seitlichen vorderen Höhenverstellorgane (soweit solche vorhanden sind) nicht allzu groß sein. Nach Möglichkeit soll eine ausreichende Dichtigkeit im Bereich der Plattenvorderkante sogar dann möglich sein, wenn seitliche vordere Höhenverstellorgane überhaupt nicht vorgesehen sind.

Davon ausgehend liegt der Erfindung die Aufgabe zugrunde, unter möglichst weitgehender Meidung vorerwähnter Nachteile ein verbessertes gattungsgemäßes Fahrzeugschiebedach zu schaffen, insbesondere eines, bei dem mit einfachen Mitteln ein vorteilhafter Bewegungsablauf der Platte ohne besondere Konzentrationsanforderungen an die Bedienperson erreicht wird. Gewünscht ist ferner eine möglichst schnelle Höhenverstellbarkeit in bezug auf die Schiebebewegung zu Beginn der Öffnungsbewegung der Platte.

Diese Aufgabe wird durch ein Fahrzeugschiebedach mit den Merkmalen des Patentanspruchs 1 gelöst.

Die Anordnung eines vorderen Höhenverstellorganes im mittleren Bereich der Plattenvorderkante führt dazu, daß die Platte in ihrer Längsmitte und insbesondere im vorderen Bereich ihrer Längsmitte elastisch verbogen wird, d.h. stärker als in den übrigen Plattenbereichen angehoben und abgesenkt wird. Die ortsfeste Anordnung des Höhenverstellorganes am Fahrzeugdach führt zwingend dazu, daß dieses Höhenverstellorgan nur dann auf den Schiebedeckel einwirken kann, wenn sich dessen Vorderkante nahe seiner oder in seiner vordersten Verschiebeposition befindet. Sobald nämlich eine Verschiebung der Platte in Fahrzeuglängsrichtung nach hinten stattfindet, entfernt sich die Plattenvorderkante vom vorderen Öffnungsrand im Fahrzeugdach und damit von dem Höhenverstellorgan, so daß die elastische Verformung aufgrund dieses Höhenverstellorganes dann — zwangsläufig — wieder nachläßt, sobald das Höhenverstellorgan und die Platte (Verschiebedeckel) außer Kontakt kommen. Die ortsfeste Anordnung des erfindungsgemäßen Höhenverstellorganes im Bereich der vorderen Plattenmitte steht der üblichen Praxis bei Schiebedächern entgegen, denn bei Schiebedächern sind die Höhenverstellorgane so vorgesehen, daß sie in allen verschiedenen Verschiebepositionen der Platte wirksam sind, indem sie unmittelbar auf deren aktuelle Höhenposition Einfluß nehmen.

Ein erfindungsgemäßes Fahrzeugschiebedach hat unter anderem folgende vorteile :

— Die verschiebbare Platte ist in allen Öffnungsstellungen exakt geführt und daher äußerst geräuscharm auch bei schnellem Fahren und bei Windböen ;

— es kann aus wenigen, sehr einfachen, insbesondere aus Kunststoff hergestellten Teilen gebaut sein und vergleichsweise schnell zusammenmontiert werden ;

— die für ein Andrücken der Platte in Verschlußstellung gegen Dichtungen erforderlichen Schließkräfte sind ohne zusätzliche oder komplizierte Bauteile gewährleistet.

Zweckmäßige Ausgestaltungen des Erfindungsgegenstandes, die insbesondere ein von der Verschiebebewegung der Deckelplatte unabhängiges, schnelles, insbesondere hintereinanderfolgendes Höhenverstellen der Platte bewirken, eine ausreichend große Lüftungsstellung bei noch nicht im Öffnungssinne verschobener Platte auch bei besonders flachbauenden Schiebedächern, Betätigung der Platte durch ein einziges Betätigungsorgan sowie ein möglichst vorgebbares Schrägstehen der nach hinten geschobenen Platte gewährleisten, sind in weiteren Ansprüchen enthalten.

Die vorgenannten, erfindungsgemäß zu verwendenden Bauteile unterliegen in ihrer Größe, Formgestaltung, Materialauswahl und technischen Konzeptionen keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform eines erfindungsgemäßen Fahrzeugschiebedaches dargestellt ist. In der Zeichnung zeigen :

Fig. 1        ein Fahrzeugschiebedach in Aufsicht von oben ;

Fig. 2        von demselben Fahrzeugschiebedach eine Prinzipdarstellung (im Schnitt entlang der Linie II-II gemäß Fig. 1) in Schließstellung — ausschnittsweise ;

Fig. 3a bis 3d    dasselbe Fahrzeugschiebedach wie in Fig. 1 im Schnitt entlang der Linie III-III in vier verschiedenen Arbeitspositionen sowie

Fig. 4a bis 4d    von demselben Fahrzeugschiebedach wie in Fig. 1 einen Schnitt entlang der Linie IV-IV in vier verschiedenen Arbeitspositionen.

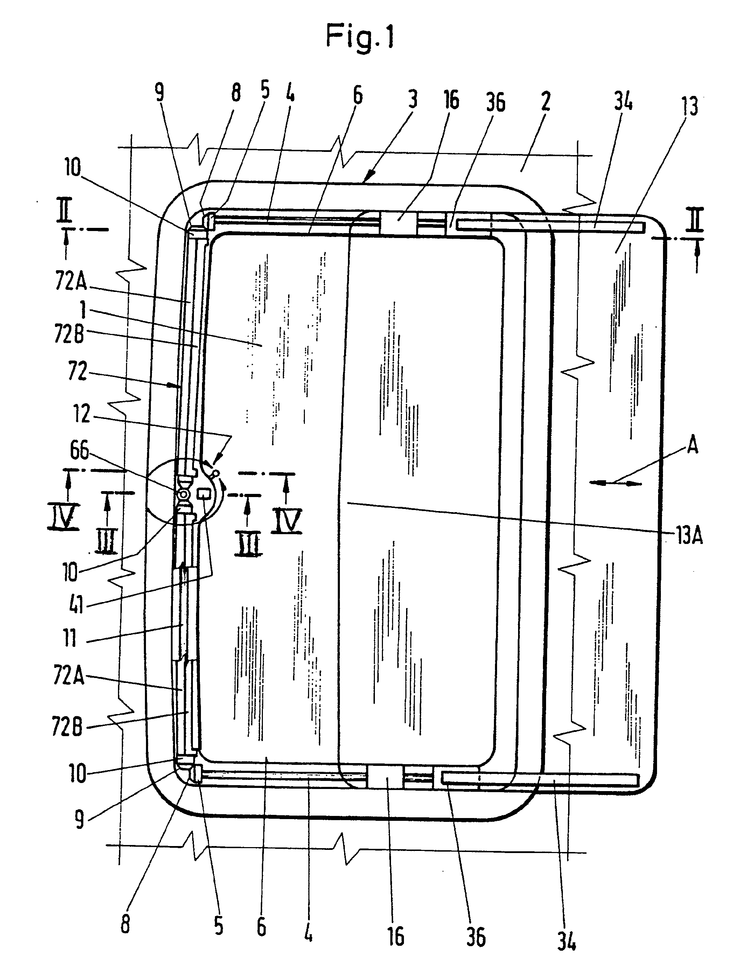

Bei einem Fahrzeugschiebedach gemäß Fig. 1 ist eine Dachöffnung 1 eines Fahrzeugdaches 2 z.B. mit einem Rahmen 3 aus Kunststoff und/oder Metall eingefaßt ; der Rahmen 3 ist Bestandteil eines nachrüstbaren Fahrzeugschiebedaches, oder man verwendet einen bereits bei der Fahrzeugherstellung in das Fahrzeugdach integrierten Rahmen, der im Querschnitt, zumindest in Fahrzeuglängsrichtung bevorzugt ein L- oder U-förmiges, nach oben insbesondere offenes Profil zur möglichst vollständigen Aufnahme der zum Bewegen des Fahrzeugschiebedaches erforderlichen Bauteile aufweist. Innerhalb der in Fahrzeuglängsrichtung A weisenden Rahmenstreben 6 sind als Betätigungsorgane 4 einer in ihrer vordersten Stellung die Dachöffnung 1 verschließenden verschiebbaren Platte 13 bevorzugt je eine einstückige Antriebsspindel drehbar und axial nicht verschieblich gelagert. An der Vorderseite der Dachöffnung 1 weisen die Spindeln endseitige Kegelräder 8 auf, welche mit Kegelrädern 9 von im Rahmenvorderteil auf Lagerböcken 10 gelagerten Antriebswellen 11 kämmen. Die Antriebswellen 11 enden in der Rahmenmitte in einem an sich bekannten Kurbeltrieb 12.

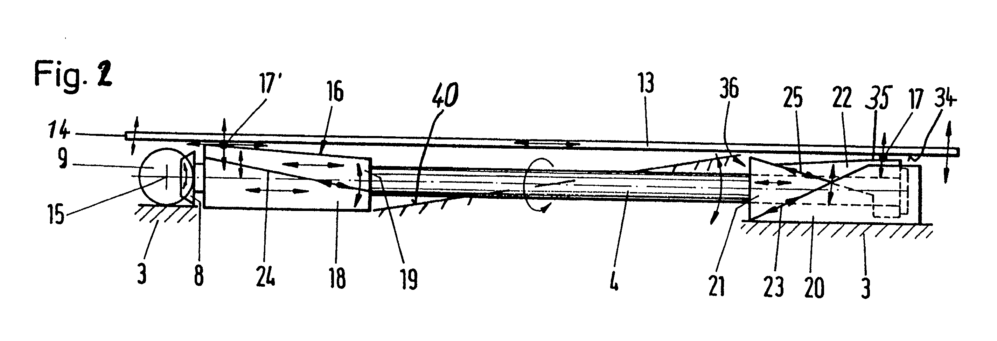

Wie aus Fig. 2 ersichtlich, weist die Platte 13 nahe ihrer Vorderkante 14 eine waagerechte Querachse 15 oder ein ähnliches Organ auf, um das die von einer Vorderstütze 16 getragene Platte 13 schwenkbar ist. Die Hinterkante der Platte 13 ist mittels des Betätigungsorganes, das auch eine Führungsstrebe mit parallel laufendem Zug und/oder Druckelement oder ein Bowdenzug oder dergleichen sein kann, bevorzugt aber eine, insbesondere aus Kunststoff hergestellte Antriebsspindel mit Schneckengewinde ist, höhenverstellbar und weist hierzu bevorzugt ein unteres, ein mittleres und ein oberes Gleitelement 20 bis 22 auf, die gemeinsam das Höhenverstellorgan bilden ; grundsätzlich sind schon zwei Gleitelemente ausreichend. Das hintere Höhenverstellorgan kann die Funktion einer Hinterstütze 36 übernehmen. Plattenseitig ist ein hinteres Halteorgan 17, das bevorzugt mit einer weiteren Querachse für eine geringfügige Schwenkbewegung zwischen dem Höhenverstellorgan und der Platte 13 versehen ist, angeordnet. Ein ähnliches Halteorgan 17' kann im Bereich der Vorderstütze 16, bezüglich der Deckelplatte 13 insbesondere ortsfest, vorgesehen sein.

Auch die Vorderstütze 16 kann als Höhenverstellorgan ausgebildet sein und hierzu, ähnlich wie bei dem hinteren Höhenverstellorgan ein unteres und ein oberes Gleitelement, insbesondere zwei Gleitelemente 18 und 19 aufweisen.

Die Anlenkpunkte der Platte 13 an der Vorder- und Hinterstütze können sich unmittelbar oberhalb der Antriebsspindel befinden oder auch seitlich versetzt dazu bzw. seitlich versetzt zu einem anderen Betätigungsorgan angeordnet sein.

Die Vorderstütze 16 weist eine in der Zeichnung nicht näher dargestellte Gewindehülse innerhalb einer entsprechenden Durchbrechung auf, durch die beim Drehen der Spindel die Vorderstütze 16 in Fahrzeuglängsrichtung A bewegt wird. In der Zeichnung ist die Vorderstütze 16 als vorderes Höhenverstellorgan ausgebildet, um zu Beginn des Öffnungsweges der Platte 13 eine Druckentlastung von einer etwa zwischen dem Rahmen 3 und der Platte 13 vorgesehenen Dichtung zu bewirken. Die Höhenverstellung braucht daher nur einige Millimeter, z.B. 5 bis 10 mm zu betragen. Zu diesem Zweck besteht das Höhenverstellorgan (Stütze 16) aus einem unteren, von der Antriebsspindel unbehindert vor- und zurückschiebbaren unteren Gleitelement 18 und einem oberen, mit dem Halteorgan 17' der Deckelplatte 13 gelenkig und bezüglich der Platte 13 ortsfest mit ihr verbundenen Gleitelement 19. Die Gleitelemente 18 und 19 sind längs einer zwischen ihnen gebildeten schiefen Ebene 24 zueinander, z.B. durch Schwalbenschwanzverbindungen gleitend geführt. Zwischen den Gleitelementen 18 und 19 wirkt eine nicht dargestellte Feder im Sinne einer gegenseitigen Verschiebung der Gleitelemente 18 und 19 in Fahrzeuglängsrichtung A. Die Funktion dieser Feder ist in der WO-A-87/03847 beschrieben.

Das Gleitelement 18 erstreckt sich stets parallel zur Erstreckungsrichtung der Antriebsspindel 4 — ebenso das Gleitelement 19, das gegenüber dem Gleitelement 18 ebenfalls im wesentlichen spielfrei an der Ebene 24 geführt ist. Die weiter unten noch zu erläuternde Neigungsänderung zwischen der Antriebsspindel und der Platte während des Öffnens und Verschließens des Fahrzeugschiebedaches führt also zu einem geringfügigen Verschwenken des Höhenverstellorganes 16 gegenüber der Platte 13 um die vom Halteorgan 17' gebildete Querachse.

Beim Schieben des Gleitelementes 18 nach vorne durch entsprechend umgekehrtes Drehen der Antriebsspindel, etwa aus der Öffnungsposition, wird das Gleitelement 19 und damit die Platte 13 von dem angetriebenen Gleitelement 18 mitgenommen. Sobald die Platte 13 mit einem rahmenseitigen Anschlag oder einer Dichtung vertikal zur Anlage kommt, wird sie bei weiterem Verschieben des Gleitelementes 18 nach vorne mit abstimmbar großer Kraft nach unten gespannt, so daß die gewünschte Schließkraft problemlos aufgebracht werden kann. Für ein derartiges Höhenverstellorgan wird also trotz Verwendung eines einzigen Antriebsorganes erreicht, daß zunächst die Höhenverstellung und erst danach die längsverschiebung der Platte 13 bzw. die umgekehrte Bewegungsabfolge durch das Betätigungsorgan 4 bewirkt wird, wobei die Führung aller Bauelemente zueinander quasi spielfrei ist, so daß auch bei geöffnetem Fahrzeugschiebedach keine Klappergeräusche od.dgl. entstehen.

Das Gleitelement 18 des vorderen Höhenverstellorganes bewegt sich bei der bevorzugten Verwendung einer Antriebsspindel als Betätigungsorgan oder Verwendung eines ähnlich wirkenden Führungselementes auf dem Weg nach hinten exakt parallel zu dem Betätigungsorgan. Im Ausführungsbeispiel gemäß Fig. 2 bedeutet dies ein allmähliches Bewegen der Vorderstütze 16 nach oben bei zunehmender Verschiebung der Platte 13 nach hinten, wobei die dabei erzielte Höhenverstellung durch die Neigung der schiefen Ebene 23 bestimmbar ist. Da bei der Längsverschiebung der Platte das plattenseitige Halteorgan 17 an der Hinterstütze 36 seine Höhenposition beibehält und die Platte bezüglich des Fahrzeugdaches weniger stark nach hinten ansteigt als die Antriebsspindel, neigt sich die hintere Plattenkante bei der Öffnungsbewegung also zunehmend nach unten. Hier wird also auf einfache Weise ein zunehmendes Flacherstellen der Platte 13 bei zunehmender Verschiebestellung nach hinten erreicht, obwohl die Platte 13 in der vordersten Schiebeposition — einer guten Fahrgastraumlüftung entsprechend — hinreichend schräg gestellt sein kann. Dadurch wird die Spoiler-Wirkung bei nach hinten geschobener Platte 13 vermindert. Dies kann deshalb von Nutzen sein, weil die Vorder- und die Hinterstütze bei nach hinten geschobener Platte einen kürzeren Abstand aufweisen und nur geringere, an der Platte 13 angreifende Hebelkräfte aufnehmen können.

Wenn umgekehrt die Platte bezüglich des Fahrzeugdaches stärker als die Antriebsspindel geneigt ist, bzw. die Platte und die Antriebsspindel nach hinten auseinanderlaufen, wird die Platte beim Nach-Hinten-Verschieben zunehmend steiler angestellt. Die möglichen Bewegungen der einzelnen Bauteile ergeben sich aus Fig. 2.

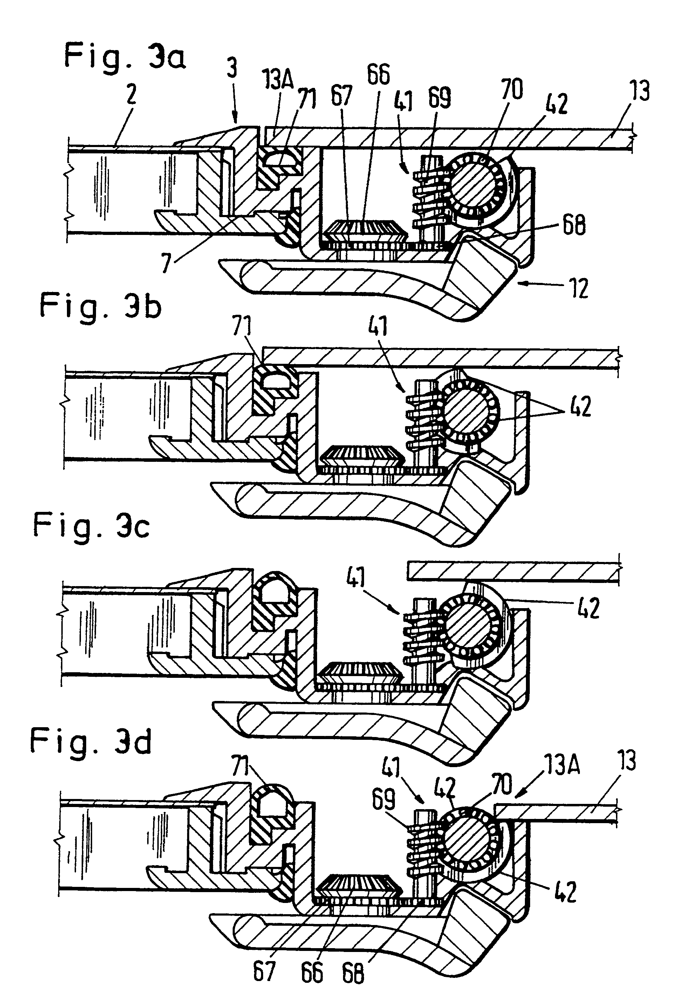

In Fig. 3a bis 3d ist — gemäß Anspruch 1 — ein nachrüstbares Fahrzeugschiebedach mit einem weiteren Höhenverstellorgan 41 dargestellt, dessen zweiteiliger Rahmen 3 das Blech des Fahrzeugdaches 2 am Rand der Dachöffnung zwischen sich festklemmt. Der etwa in der Mitte der vorderen Rahmenstrebe 7 angeordnete, an sich bekannte Kurbeltrieb 12 treibt über ein Antriebskegelrad 66 oder ein entsprechendes Antriebsrad eines Riementriebes die in Fig. 1 dargestellten Antriebsspindeln 4 an. Unterhalb des Antriebskegelrades 66 befindet sich ein zu ihm koaxial angeordnetes und gleichzeitig mit ihm synchron angetriebenes Zahnrad 67, das mit einem Zahnrad 68 kämmt, welches wiederum das untere Ende eines Schneckenrades 69 bildet. Das Schneckenrad 69 kämmt mit einem Zahnkranz 70, der mit der Kurvenscheibe 42 drehfest verbunden ist und diese im Verdrehsinne antreibt. Bevorzugt sind beidseitig des Zahnkranzes 70 gleichartige Kurvenscheiben 42 vorgesehen. Das Material oder zumindest die Oberfläche der Kurvenscheibe 42, die mit der Unterseite der Platte 13 in Kontakt kommt, ist zur Vermeidung eines Verkratzens der Platte vorzugsweise leicht elastisch.

Die Kurvenscheibe 42 ist so angeordnet, daß sie die Vorderkante 13A der Deckelplatte 13 von unten erfaßt und beim weiteren Verdrehen der Kurvenscheibe 42 und dem damit synchron verlaufenden Verschieben der Platte 13 nach vorne oder hinten auf das gewünschte Niveau anhebt (Fig. 3b/c). Sobald (bei der Schließbewegung) die vorderste Position der Platte 13 erreicht ist (Fig. 3b), führt ein weiteres Verdrehen der Kurvenscheibe 42 zum Absenken der Vorderkante 13A auf eine den Rahmen 3 umlaufende Dichtung 71 (Fig. 3a). Gleichzeitig mit dem Absenken der Vorderkante 13A mittels des Höhenverstellorganes 41 erfolgt das Absenken (Höhenverstellen) an den Seitenrändern der Platte 13, insbesondere im Bereich der Hinterstützen 36, in der weiter oben beschriebenen Weise. — Es versteht sich, daß das vorbeschriebene weitere Höhenverstellorgan 41 auch in Verbindung mit anderen seitlich auf die Platte 13 wirkender Höhenverstellorganen sinnvoll einsetzbar ist.

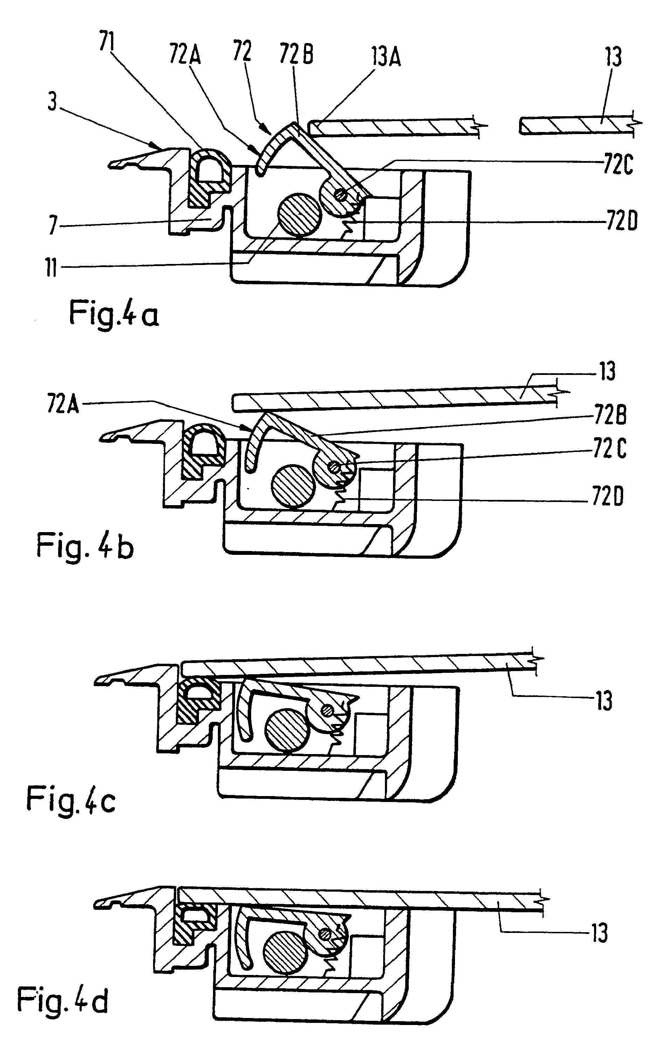

Wie aus Fig. 4a bis 4d in Verbindung mit Fig. 1 ersichtlich, kann ein Fahrzeugschiebedach, insbesondere ein Spoilerdach, das im Bereich der Vorderkante 13A der Platte 13 zumindest ein Höhenverstellorgan (also seitlich und/oder in der Mitte) aufweist, mit einem selbsttätigen Windabweiser 72 — gemäß Anspruch 11 — ausgestattet werden, wenn dessen Schwenkachse 72C — anders als bei den bekannten Windabweisern — relativ weit hinten angeordnet ist und einen von der Schwenkachse 72C getragenen Hebel 72B aufweist, der entgegen der Fahrtrichtung geneigt ist und an seinem vorderen Ende die Windabweisefläche 72A trägt. Dadurch wird die Windabweisefläche 72A in einer Kreisbewegung insgesamt angehoben. Die Betätigung des Windabweisers 72 kann allein mittels der Platte 13 erfolgen, wenn eine Feder 72D den Windabweiser in ihrer relativ entspannten Stellung in der in Fig. 4a dargestellten Windabweiseposition hält und die Platte 13 den Windabweiser im Bereich des freien Endes des Hebels 72B bei der Öffnungs- und Schließbewegung der Platte 13 entlastet bzw. niederdrückt. Dies ist aus der Bewegungsabfolge gemäß Fig. 4a bis 4d ersichtlich.

Ein derartiger Windabweiser gestattet ein problemloses Unterbringen einer Antriebswelle 11 oder eines Antriebsriemens in der vorderen Rahmenstrebe 7, und zwar in dem von dem Hebel 72B und der Windabweisefläche 72A freigelassenen Innenwinkelbereich. Es versteht sich, daß ein derartiger Windabweiser, auch unabhängig von dem speziell verwendeten Antriebs- und Höhenverstellmechanismus der Platte 13, verwendbar ist

### Bezugszeichenliste

| | |
|---|---|
| 1 | Dachöffnung |
| 2 | Fahrzeugdach |
| 3 | Rahmen |
| 4 | Betätigungsorgan (Antriebsspindel) |
| 5 | Lagerbock |
| 6 | Rahmenstrebe |
| 7 | Rahmenstrebe |
| 8 | Kegelräder |
| 9 | Kegelräder |
| 10 | Lagerböcke |
| 11 | Antriebswellen |
| 12 | Kurbeltrieb |
| 13 | Platte |
| 13A | Vorderkante |
| 14 | Vorderkante |
| 15 | Querachse |
| 16 | Vorderstütze (vorderes Höhenverstellorgan) |
| 17 | Halteorgan (hinteres) |
| 17' | Halteorgan (vorderes) |
| 18 | Gleitelement (unteres) |
| 19 | Gleitelement (oberes) |
| 20 | Gleitelement (unteres) |
| 21 | Gleitelement (mittleres) |
| 22 | Gleitelement (oberes) |
| 23 | schiefe Ebene (hinten) |
| 24 | weitere schiefe Ebene (vorne) |
| 25 | weitere schiefe Ebene (hinten oben) |
| 34 | Führung |
| 35 | Führung |

| 36 | Hinterstütze |
|---|---|
| 40 | Führungsschiene (weitere) |
| 41 | Höhenverstellorgan (weiteres) |
| 42 | Kurvenscheibe |
| 66 | Antriebskegelrad |
| 67 | Zahnrad |
| 68 | Zahnrad |
| 69 | Schneckenrad |
| 70 | Zahnkranz |
| 71 | Dichtung |
| 72 | Windabweiser |
| 72A | Windabweisefläche |
| 72B | Hebel |
| 72C | Schwenkachse |
| 72D | Feder |
| A | Fahrzeuglängsrichtung |

**Patentansprüche**

1. Fahrzeugschiebedach, zumindest bestehend aus einer Platte mit einer Vorderkante und einer Hinterkante, einer Öffnung im Fahrzeugdach, einer Führungsschiene, einem ersten und einem zweiten Höhenverstellorgan und einem Betätigungsorgan, wobei die Platte
— in einer ersten Stellung die Öffnung (1) im Fahrzeugdach (2) verschließt,
— mittels des ersten Höhenverstellorganes zumindest an ihrer, in Längsrichtung (A) des Fahrzeuges gesehenen, Hinterkante und mittels des zweiten Höhenverstellorganes im Bereich ihrer Vorderkante (13A) anheb- und absenkbar ist,
— außerhalb der Dachöffnung (1) in verschiedene Stellungen auf einer Seite des Fahrzeugdaches (2) verschiebbar ist,
— in Längsrichtung (A) des Fahrzeuges entlang der Führungsschiene vor- und zurückbewegbar ist und
— mittels des mindestens einen Betätigungsorganes zumindest verschiebbar ist, **dadurch gekennzeichnet,** daß das zweite Höhenverstellorgan (41) im mittleren Bereich der Vorderkante (13A) der Platte (13) ortsfest am Fahrzeugdach angeordnet ist.

2. Fahrzeugschiebedach nach Anspruch 1, dadurch gekennzeichnet, daß das zweite Höhenverstellorgan (41) eine in Verschieberichtung der Platte (13) verdrehbare Kurvenscheibe (42) aufweist.

3. Fahrzeugschiebedach nach Anspruch 1 oder 2, dadurch gekennzeichnet, daß das Betätigungsorgan für die Platte, wie ein Kurbelantrieb (12), ebenfalls als Betätigungsorgan für das zweite Höhenverstellorgan (41) dient.

4. Fahrzeugschiebedach nach Anspruch 3, dadurch gekennzeichnet, daß zum Antrieb des zweiten Höhenverstellorganes (41) ein Zahnradgetriebe (67, 68) vorgesehen ist.

5. Fahrzeugschiebedach nach Anspruch 4, dadurch gekennzeichnet, daß das antreibende Zahnrad (67) unterhalb eines Antriebskegelrades (66) oder eines entsprechenden Antriebsrades eines Riementriebes für den Antrieb des Betätigungsorganes (4) der Platte (13) vorgesehen ist.

6. Fahrzeugschiebedach nach einem der Ansprüche 2 bis 5, gekennzeichnet durch ein Schneckenrad (69) und einen mit dem Schneckenrad kämmenden Zahnkranz (70) als Drehantrieb für die Kurvenscheibe (42).

7. Fahrzeugschiebedach nach Anspruch 6, dadurch gekennzeichnet, daß beidseitig des Zahnkranzes (70) gleichartige Kurvenscheiben (42) vorgesehen sind.

8. Fahrzeugschiebedach nach einem der Ansprüche 1 bis 7, dadurch gekennzeichnet, daß das Material oder zumindest die Oberfläche der Kurvenscheibe (42), die mit der Unterseite der Platte (13) in Kontakt kommt, mit Mitteln zur Vermeidung eines Verkratzens der Platte versehen, vorzugsweise leicht elastisch ausgestaltet, ist.

9. Fahrzeugschiebedach nach einem der Ansprüche 2 bis 8, dadurch gekennzeichnet, daß die Kurvenscheibe (42) derart angeordnet ist, daß sie die Vorderkante (13A) der Deckelplatte (13) von unten erfaßt und beim weiteren Verdrehen der Kurvenscheibe und dem damit synchron verlaufenden Verschieben der Platte (13) nach vorne oder hinten auf das gewünschte Niveau anhebt, wobei ein weiteres Verdrehen der Kurven-

EP 0 313 099 B1

scheibe (42) in der vordersten Position der Platte (13) bei der Schließbewegung ein Absenken und bei der Öffnungsbewegung ein Anheben der Vorderkante (13A) auf eine bzw. von einer den Rahmen (3) umlaufende/n Dichtung (71) herbeiführt.

10. Fahrzeugschiebedach nach einem der Ansprüche 1 bis 9, dadurch gekennzeichnet, daß mit dem Absenken der Vorderkante (13A) mittels des Höhenverstellorganes (41) auch das Absenken an den Seitenrändern der Platte (13) durchführbar ist.

11. Fahrzeugschiebedach nach einem der Ansprüche 1 bis 10, dadurch gekennzeichnet, daß ein Windabweiser (72) an der vorderen Rahmenstrebe (7) des Rahmens (3) angeordnet ist und eine Windabweisefläche (72A) mittels eines Hebels (72B) anhebbar und absenkbar ist, wobei die Schwenkachse (72C) des Hebels (72B) in Fahrtrichtung am hinteren Hebelende angeordnet ist.

12. Fahrzeugschiebedach nach einem der vorangehenden Ansprüche, dadurch gekennzeichnet, daß die Führungsschiene eine das Betätigungsorgan (4) der Platte (13) bildende Antriebsspindel, insbesondere mit außenliegendem Schneckengewinde, ist.

13. Fahrzeugschiebedach nach einem der Ansprüche 1 bis 12, dadurch gekennzeichnet, daß die Vorderstütze (16) als vorderes Höhenverstellorgan ausgebildet ist, insbesondere aus mindestens zwei längs einer schiefen Ebene (24) zueinander gleitend geführten Gleitelementen (18 und 19) besteht.

14. Fahrzeugschiebedach nach einem der Ansprüche 1 bis 13, dadurch gekennzeichnet, daß das mindestens eine Betätigungsorgan (4) über ein endseitiges Winkelgetriebe (Kegelräder 8 und 9) von einer Antriebswelle (11) betätigbar ist.

15. Fahrzeugschiebedach nach einem der Ansprüche 1 bis 14, dadurch gekennzeichnet, daß die Betätigungsorgane und/oder die Höhenverstellorgane aus aus Kunststoff hergestellten Bauteilen bestehen.

16. Fahrzeugschiebedach nach einem der Ansprüche 1 bis 15, gekennzeichnet durch eine weitere, ortsfeste Führungsschiene (40) für die Vorderstütze (16), die bezüglich der Dachhaut derart geneigt ist, daß sie parallel zum Verschiebeweg der Vorderstütze (16) angeordnet ist.

## Claims

1. A vehicle sliding roof, at least comprising a plate with a front edge and a rear edge, an opening in the vehicle roof, a guide rail, a first and a second vertical displacement means and an actuating means, wherein the plate
— closes the opening (1) in the vehicle roof (2) in a first position ;
— can be raised and lowered by means of the first vertical displacement means at least on its rear edge as viewed in the longitudinal direction (A) of the vehicle and by means of the second vertical displacement means in the region of its front edge (13A) ;
— can be moved into various positions on one side of the vehicle roof (2) outside the roof opening (1) ;
— can be reciprocated in the longitudinal direction (A) of the vehicle along the guide rail, and
— can be at least displaced by means of actuating means, of which there is at least one, characterized in that the second vertical displacement means (41) is mounted stationary on the vehicle roof in the central region of the front edge (13A) of the plate (13).

2. A vehicle sliding roof according to Claim 1, characterized in that the seond vertical displacenent means (41) comprises a cam disc (42) rotatable in the displacement direction of the plate (13).

3. A vehicle sliding roof according to Claim 1 or 2, characterized in that the actuating means for the plate, such as a cam drive (12), likewise serves as an actuating means for the second vertical displacement means (41).

4. A vehicle sliding roof according to Claim 3, characterized in that a toothed gearing (67, 68) is provided for driving the second vertical displacement means (41).

5. A vehicle slide roof according to Claim 4, characterized in that the driving gearwheel (67) is provided below a driving bevel wheel (66) or a corresponding driving wheel of a belt drive for driving the actuating means (4) of the plate (13).

6. A vehicle slide roof according to any one of Claims 2 to 5, characterized by a worm gear (69) and a toothed rim (70) meshing with the worm gear as a rotary drive for the cam disc (42).

7. A vehicle sliding roof according to Claim 6, characterized in that similar cam discs (42) are provided on both sides of the toothed rim (70).

8. A vehicle sliding roof according to any one of Claims 1 to 7, characterized in that the material or at least the surface of the cam disc (42), which comes into contact with the underside of the plate (13), is provided with means to prevent the plate from being scratched, and is preferably made slightly resilient.

9. A vehicle sliding roof according to any one of Claims 2 to 8, characterized in that the cam disc (42) is

7

arranged in such a way that it grips the front edge (13A) of the cover plate (13) from below and during the further rotation of the cam disc and the displacement of the plate occurring synchronously therewith lifts it forwards or rearwards to the desired level, a further rotation of the cam disc (42) in the foremost position of the plate (13) during the closing movement causing the front edge (13A) to be lowered onto a seal (71) surrounding the frame (3) and during the opening movement causing it to be lifted off the said seal.

10. A vehicle sliding roof according to any one of Claims 1 to 9, characterized in that lowering at the lateral edges of the plate (13) can also be carried out by lowering the front edge (13A) by means of the vertical displacement means (41).

11. A vehicle sliding roof according to any one of Claims 1 to 10, characterized in that a wind deflector (72) is arranged on the front strut (7) of the frame (3) and a wind-deflecting surface (72A) can be raised and lowered by means of a lever (72B), the pivot shaft (72C) of the lever (72B) being situated at the rear end of the lever in the direction of travel.

12. A vehicle sliding roof according to any one of the preceding claims, characterized in that the guide rail is a driving spindle, in particular with an external worm thread, forming the actuating means (4) of the plate (13).

13. A vehicle sliding roof according to any one of Claims 1 to 12, characterized in that the front support (16) is formed as the front vertical displacement means, and in particular comprises at least two sliding elements (18 and 19) sliding over each other along an inclined plane (24).

14. A vehicle sliding roof according to any one of Claims 1 to 13, charaterized in that the actuating means (4), of which there is at least one, can be actuated by a driving shaft (11) by way of a mitre gearing (bevel gears 8 and 9) at the end.

15. A vehicle sliding roof according to any one of Claims 1 to 14, characterized in that the actuating means and/or the vertical displacement means comprise components produced from plastics materials.

16. A vehicle sliding roof according to any one of Claims 1 to 15, characterized by a further, stationary guide rail (40) for the front support (16), which is inclined with respect to the roof skin in such a way that it is arranged parallel to the displacement path of the front support (16).

## Revendications

1. Toit ouvrant pour véhicules automobiles, comprenant au moins un panneau avec un bord avant et un bord arrière, une ouverture pratiquée dans le toit du véhicule, un rail de guidage, un premier et un second organe de réglage en hauteur ainsi qu'un organe d'actionnement, le panneau
— dans une première position, ferme l'ouverture (1) pratiquée dans le toit du véhicule (2),
— peut être soulevé et abaissé, au moyen du premier organe de réglage en hauteur, au moins sur son bord arrière, vu dans le sens longitudinal (A) du véhicule, et au moyen du second organe de réglage en hauteur, dans la zone de son bord avant (13A),
— peut être déplacé, à l'extérieur de l'ouverture (1) pratiquée dans le toit, pour occuper diverses positions sur un côté du toit du véhicule (2),
— peut être déplacé en avant et en arrière dans le sens longitudinal (A) du véhicule le long du rail de guidage et
— peut être au moins déplacé par au moins un organe d'actionnement, caractérisé en ce que le second organe de réglage en hauteur (41) est monté fixe dans la zone médiane du bord avant (13A) du panneau (13) sur le toit du véhicule.

2. Toit ouvrant pour véhicules automobiles suivant la revendication 1, caractérisé en ce que le second organe de réglage en hauteur (41) présente un disque à came (42) pouvant tourner dans le sens de déplacement du panneau (13).

3. Toit ouvrant pour véhicules automobiles suivant la revendication 1 ou 2, caractérisé en ce que l'organe d'actionnement pour la plaque, tel qu'un entraînement à manivelle (12), sert également d'organe d'actionnement pour le second organe de réglage en hauteur (41).

4. Toit ouvrant pour véhicules automobiles suivant la revendication 3, caractérisé en ce qu'une transmission par engrenage (67, 68) est prévue pour l'entraînement du second organe de réglage en hauteur (41).

5. Toit ouvrant pour véhicules automobiles suivant la revendication 4, caractérisé en ce que la transmission par engrenage (67) est disposée en-dessous d'une couronne d'entraînement (66) ou d'un pignon d'entraînement correspondant d'une commande à courroie pour l'entraînement de l'organe d'actionnement (4) du panneau (13).

6. Toit ouvrant pour véhicules automobiles suivant l'une des revendications 2 à 5, caractérisé en ce que le disque à came (42) est entraîné en rotation par une roue à denture hélicoïdale (69) et une couronne dentée (70) en prise avec celle-ci.

7. Toit ouvrant pour véhicules automobiles suivant la revendication 6, caractérisé en ce que des disques à came (42) identiques sont prévus de part et d'autre de la couronne dentée (70).

8. Toit ouvrant pour véhicules automobiles suivant l'une des revendications 1 à 7, caractérisé en ce que la matière ou au moins la surface du disque à came (42) qui vient au contact de la face inférieure du panneau (13) comporte des moyens pour éviter des rayures sur le panneau, et cette surface étant réalisée, de préférence, de façon légèrement élastique.

9. Toit ouvrant pour véhicules automobiles suivant l'une des revendications 2 à 8, caractérisé en ce que le disque à came (42) est disposé de façon à saisir le bord avant (13A) du panneau (13) d'en bas et à l'amener au niveau souhaité, pendant la poursuite de la rotation du disque à came et du déplacement synchrone du panneau (13) vers l'avant ou vers l'arrière, et une rotation ultérieure du disque à came (42), lorsque le panneau (13) occupe sa position la plus en avant, entraîne un abaissement, lors du mouvement de fermeture, du bord avant (13A) sur un joint circonférentiel (71), et une montée, lors du mouvement d'ouverture, du bord avant (13A) à partir du joint circonférentiel (71), prévu dans le cadre (3).

10. Toit ouvrant pour véhicules automobiles suivant l'une des revendications 1 à 9, caractérisé en ce que l'abaissement du bord avant (13A) au moyen de l'organe de réglage en hauteur (41) peut être accompagnée également de l'abaissement le long des bords latéraux du panneau (13).

11. Toit ouvrant pour véhicules automobiles suivant l'une des revendications 1 à 10, caractérisé en ce qu'un déflecteur de vent (72) est placé sur l'extrémité avant (7) du cadre (3) et qu'une surface de déflecteur de vent (72A) peut être soulevée et abaissée au moyen d'un levier (72B), l'axe de pivotement (72c) du levier (72B) étant disposé dans le sens de la marche du véhicule sur l'extrémité arrière du levier.

12. Toit ouvrant pour véhicules automobiles suivant l'une des revendications précédentes, caractérisé en ce que le rail de guidage est constitué par une broche d'entraînement formant l'organe d'actionnement (4) du panneau (13), le filetage de ladite broche étant situé de préférence à l'extérieur.

13. Toit ouvrant pour véhicules automobiles suivant l'une des revendications 1 à 12, caractérisé en ce que le montant avant (16) est réalisé en tant qu'organe de réglage en hauteur avant, et comprend de préférence deux éléments à glissière (18 et 19) guidés de façon coulissante l'un par rapport à l'autre, le long d'un plan incliné (24).

14. Toit ouvrant pour véhicules automobiles suivant l'une des revendications 1 à 13, caractérisé en ce que l'organe d'actionnement (4), au nombre d'au moins un peut être actionné par un engrenage conique, côté extrémité, (pignons coniques 8 et 9) par un arbre d'entraînement (11).

15. Toit ouvrant pour véhicules automobiles suivant l'une des revendications 1 à 14, caractérisé en ce que les organes d'actionnement et/ou les organes de réglage en hauteur sont constitués par des pièces en matière synthétique.

16. Toit ouvrant pour véhicules automobiles suivant l'une des revendications 1 à 15, caractérisé par un rail de guidage supplémentaire fixe (40) pour le montant avant (16), ledit rail étant incliné par rapport au toit de façon à être parallèle à la trajectoire de déplacement du montant avant (16).

# Fig.1

Fig. 2

Fig. 3a

Fig. 3b

Fig. 3c

Fig. 3d

Fig.4a

Fig. 4b

Fig.4c

Fig.4d